# EUROPEAN PATENT APPLICATION

(11) **EP 4 832 664 A1**
(43) Date of publication of application: **28.10.2026**
(21) Application number: 25197613.0
(22) Date of filing: 22.08.2025
(51) Int. Cl.: H05B 45/10, F21L 4/00, F21V 21/084, F21V 23/04, H05B 47/10, H05B 47/105, H05B 47/17

(54) **CONTROL METHOD OF LIGHTING FIXTURE AND LIGHTING FIXTURE**

(30) Priority: 21.04.2025 CN 202510496318
(71) Applicant: SYSMAX Innovations Co., Ltd, Guangzhou, Guangdong 510600 (CN)
(72) Inventor: LI, Wenjie, Guangzhou, 510600 (CN)
(74) Representative: Isern Patentes y Marcas S.L.

(57) **Abstract**

A control method for a lighting fixture and the lighting fixture are provided, the lighting fixture includes a plurality of lighting modes, each lighting mode is associated with corresponding lighting parameters, with one lighting mode being preset as a current lighting mode of the lighting fixture, the control method including: acquiring continuously current attitude data of the lighting fixture; and adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode. The control method of the lighting fixture, the control method of the lighting fixture when switching the lighting modes can automatically switch without requiring switching through physical buttons, enhances user experience, and reduces a number of operations on physical buttons.

## Description

### FIELD

The present application relates to the field of outdoor lighting technology, in particular to a control method for a lighting fixture and the lighting fixture.

### BACKGROUND

During outdoor activities, portable lighting fixtures (portable lighting devices, such as headlamps, flashlights, etc.) have become indispensable lighting tools. Among them, most of the lighting fixtures are equipped with multiple lighting modes, and by switching between different lighting modes, they meet the lighting needs under different circumstances.

Currently, when switching lighting modes, most lighting fixtures rely on physical buttons to achieve mode switching. When the lighting modes are switched, the physical buttons output control signals to the MCU (Microcontroller Unit) within the lighting fixture. When the MCU receives the control signal, the MCU adjusts the duty cycle and brightness range of the switching signals based on the received control signals to achieve lighting mode adjustment. However, the method for switching the lighting modes with physical buttons will lead to a decrease in user experience, and increasing the number of operations on the physical buttons will affect the service life of the physical buttons.

Therefore, the prior art still requires improvement and development.

### SUMMARY

In view of the deficiencies in the prior art described above, an object of the present application is to provide a control method for a lighting fixture and the lighting fixture, to solve the problem that methods of switching lighting modes using physical buttons will lead to decrease user experience, and that increasing a number of operations of the physical buttons will affect the service life of the physical buttons.

The technical solution adopted by the present application solve the technical problems is: to provide a control method for a lighting fixture, the lighting fixture includes a plurality of lighting modes, each lighting mode is associated with corresponding lighting parameters, with one lighting mode being preset as a current lighting mode of the lighting fixture, the control method including:
acquiring continuously current attitude data of the lighting fixture;
adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode.

In a further configuration of the present application, the current attitude data includes a horizontal angle, the lighting modes include a horizontal lighting mode, and the lighting fixture is preset with a horizontal angle range;
the adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode includes:
determining whether a duration of the horizontal angle of the lighting fixture within the horizontal angle range exceeds a first preset duration;
if yes, adjusting the current lighting mode of the lighting fixture to the horizontal lighting mode, and illuminating at a first preset brightness, the first preset brightness is a lighting parameter corresponding to the horizontal lighting mode, and the first preset brightness is light projected in a focused beam state.

In a further configuration of the present application, the current attitude data includes an elevation angle, the lighting modes include an upward lighting mode, and the lighting fixture is preset with an elevation angle range;
the adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode includes:
determining whether a duration of the elevation angle of the lighting fixture within the elevation angle range exceeds a second preset duration;
if yes, adjusting the current lighting mode of the lighting fixture to the upward lighting mode, and illuminating at a second preset brightness, the second preset brightness is a lighting parameter corresponding to the upward lighting mode, and the second preset brightness is light projected a diffused beam state.

In a further configuration of the present application, the current attitude data includes a depression angle, the lighting modes include a downward lighting mode, and the lighting fixture is preset with a depression angle range;
the adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode includes:
determining whether a duration of the depression angle of the lighting fixture within the depression angle range exceeds a third preset duration;
if yes, adjusting the current lighting mode of the lighting fixture to the downward lighting mode, and illuminating at a third preset brightness, the third preset brightness is a lighting parameter corresponding to the downward lighting mode, and the third preset brightness is light projected in a focused beam state.

In a further configuration of the present application, the lighting modes include a motion lighting mode;
the adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode includes:
determining whether the lighting fixture is in a motion state based on the current attitude data;
when the lighting fixture is in the motion state, adjusting the current lighting mode of the lighting fixture to the motion lighting mode, and illuminating at a fourth preset brightness, the fourth preset brightness is a lighting parameter corresponding to the motion lighting mode.

In a further configuration of the present application, the lighting fixture is preset with an angular velocity variation threshold, the current attitude data includes an angular velocity of the lighting fixture;
the determining whether the lighting fixture is in a motion state based on the current attitude data includes:
acquiring periodically the angular velocity of the lighting fixture;
acquiring a maximum angular velocity and a minimum angular velocity of the lighting fixture within an acquisition period;
calculating a difference between the maximum angular velocity and the minimum angular velocity, when the difference is greater than the preset angular velocity variation threshold, determining that the lighting fixture is in the motion state.

In a further configuration of the present application, the calculating a difference between the maximum angular velocity and the minimum angular velocity, when the difference is greater than the preset angular velocity variation threshold, determining that the lighting fixture is in the motion state includes:
when the lighting fixture enters the motion lighting mode, if the difference is less than or equal to the preset angular velocity variation threshold, then the lighting fixture exits the motion state, and continues illuminating according to the lighting mode executed before entering the motion state.

The present application further provides a lighting fixture, including:
a fixture body;
an attitude data acquisition module, disposed on the fixture body, the attitude data acquisition module is configured to acquire current attitude data of the lighting fixture;
a control module, connected to the attitude data acquisition module, the control module is configured to execute the control method for the lighting fixture as described above.

In a further configuration of the present application, the attitude data acquisition module includes:
a gyroscope, disposed on the fixture body, the gyroscope is connected to the control module.

In a further configuration of the present application, the fixture body is a headlamp body.

The beneficial effects of the present application are:
The present application discloses a control method for a lighting fixture and the lighting fixture, the lighting fixture includes a plurality of lighting modes, each lighting mode is associated with corresponding lighting parameters, with one lighting mode being preset as a current lighting mode of the lighting fixture, the control method including: acquiring continuously current attitude data of the lighting fixture; and adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode. In the technical solution of the present application, when switching the lighting modes, it is determined through the acquired current attitude data whether the current attitude data corresponds to the current lighting mode; if yes, illumination is performed with the lighting parameters corresponding to the lighting modes; if no, switching the lighting modes until the current lighting mode corresponds to the current attitude data of the lighting fixture, and illumination is performed according to the lighting parameters corresponding to the current lighting mode of the lighting fixture. Thus, the control method of the lighting fixture, the control method of the lighting fixture when switching the lighting modes can automatically switch without requiring switching through physical buttons, enhances user experience, and reduces a number of operations on physical buttons.

### BRIEF DESCRIPTION OF THE DRAWINGS

To more clearly illustrate the technical solutions in the embodiments of the present application or in the prior art, the following provides a brief introduction to the drawings required for describing the embodiments or prior art. It will be apparent that the drawings in the following description represent only some embodiments of the present application. For persons of ordinary skill in the art, other drawings can be derived from these illustrated structures without creative effort.
FIG. 1 is a flow diagram of a control method for a lighting fixture according to the present application.
FIG. 2 is a flow diagram during horizontal lighting mode in one embodiment of the present application.
FIG. 3 is a flow diagram during upward lighting mode in one embodiment of the present application.
FIG. 4 is a flow diagram during downward lighting mode in one embodiment of the present application.
FIG. 5 is a flow diagram during motion lighting mode in one embodiment of the present application.
FIG. 6 is a flow diagram for determining of a motion state in one embodiment of the present application.
FIG. 7 is a flow diagram for exiting the motion state in one embodiment of the present application.
FIG. 8 is a control block diagram of the lighting fixture according to the present application.
FIG. 9 is a schematic structural diagram of a flashlight body with gyroscope in one embodiment of the present application.
FIG. 10 is a schematic structural diagram of a headlamp body with a gyroscope in one embodiment of the present application.

Reference numerals in the drawings: 100-attitude data acquisition module; 101-gyroscope; 200-control module; 300-flashlight body; 400-headlamp body.

### DETAILED DESCRIPTION OF EMBODIMENTS

To provide a clearer understanding of the technical features, objectives, and effects of the present application, the specific implementations of the invention will now be described in detail with reference to the accompanying drawings. In the following description, it should be understood that directional or positional terms such as "front", "rear", "upper", "lower", "left", "right", "longitudinal", "transverse", "vertical", "horizontal", "top", "bottom", "inner", "outer", "head", and "tail" refer to orientations or positional relationships based on those shown in the drawings, and are constructed and operated with specific orientations. The terms are used solely for convenience in describing the technical solutions, and do not indicate that the described devices or elements must have specific orientations. Therefore, these terms should not be construed as limiting the present application.

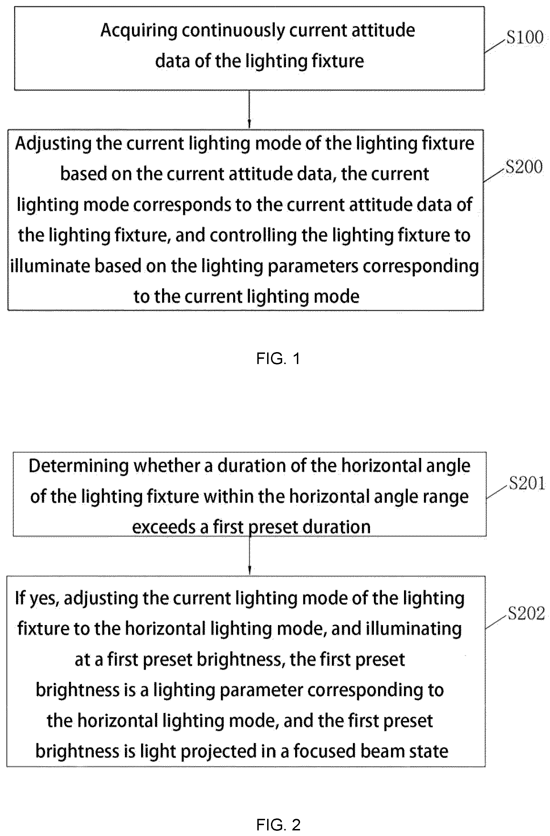

As shown in FIG. 1, the present application provides a control method for a lighting fixture. The lighting fixture is provided with a plurality of lighting modes, each lighting mode is provided with corresponding lighting parameters, and one lighting mode is preset as a current lighting mode of the lighting fixture. The control method may include steps of:
S100: acquiring continuously current attitude data of the lighting fixture;
S200: adjusting the current lighting mode of the lighting fixture based on the current attitude data, the current lighting mode corresponds to the current attitude data of the lighting fixture, and controlling the lighting fixture to illuminate based on the lighting parameters corresponding to the current lighting mode.

In advance, one lighting mode of the plurality of lighting modes is set as the current lighting mode of the lighting fixture. When the lighting fixture is in application, it requires different lighting modes along with different lighting conditions, and the lighting modes relate to an attitude of the lighting fixture. Therefore, based on the current attitude data of the lighting fixture, the current lighting mode of the lighting fixture is adjusted, the lighting modes corresponding to the current attitude data is set as the current lighting mode, and illumination is performed according to the lighting parameters corresponding to the adjusted lighting mode. The lighting parameters can include a light pattern and brightness of the lighting fixture.

In the present embodiment, when switching the lighting modes for the control method of the lighting fixture, it is determined through acquired the current attitude data whether the current attitude data corresponds to the current lighting mode; if yes, illuminating is performed with the lighting parameters corresponding to the lighting mode; if no, the lighting modes are switcheduntil the current lighting mode corresponds to the current attitude data of the lighting fixture, and illuminating is performed according to the lighting parameters corresponding to the current lighting mode of the lighting fixture. Thus, the control method of the lighting fixture when switching the lighting modes can automatically switch without requiring switching through physical buttons, enhances user experience, and reduces a number of operations on physical buttons.

In some embodiments, the current attitude data includes a horizontal angle, the lighting modes include a horizontal lighting mode, and a horizontal angle range corresponding to the horizontal lighting mode is preset in the lighting fixture.

As shown in FIG. 2, in steps of adjusting the current lighting mode of the lighting fixture based on the current attitude data, to make the current lighting mode of the lighting fixture correspond to the current attitude data of the lighting fixture, and controlling the lighting fixture to illuminate according to the lighting parameters corresponding to the current lighting mode of the lighting fixture, including:
S201: determining whether a duration of the horizontal angle of the lighting fixture within the horizontal angle range exceeds a first preset duration;
S202: if yes, adjusting the current lighting mode of the lighting fixture to the horizontal lighting mode, and illuminating at a first preset brightness, the first preset brightness is a lighting parameter corresponding to the horizontal lighting mode, and the first preset brightness is light projected in a focused beam state.

Acquiring continuously the horizontal angle of the lighting fixture, when the duration of the horizontal angle of the lighting fixture within the horizontal angle range is greater than the first preset duration, then it indicates that the lighting fixture is currently in the horizontal lighting mode; if the current lighting mode of the lighting fixture at this time is the horizontal lighting mode, then illumination can be performed with the lighting parameters corresponding to the horizontal lighting mode; if the current lighting mode of the lighting fixture at this time is not the horizontal lighting mode, then adjustment of the lighting mode is required, until the current lighting mode becomes the horizontal lighting mode, and further illumination is performed with the lighting parameters corresponding to the horizontal lighting mode.

The first preset duration can be set according to actual conditions, for example, the first preset duration can be 5 seconds, 10 seconds, 18 seconds, 20 seconds, etc., with no excessive limitations made herein.

The horizontal angle range of the lighting fixture can be set according to types of the lighting fixture, with no excessive limitations made herein. For example, when the lighting fixture is a flashlight, it may correspond to one horizontal angle range; when the lighting fixture is a headlamp, it may correspond to one horizontal angle range.

In the present embodiment, when in the horizontal lighting mode, illumination is performed at the first preset brightness, causing the lighting fixture to project light in a focused beam state.

In some embodiments, the current attitude data includes an elevation angle, the lighting modes include an upward lighting mode, and an elevation angle range corresponding to the upward lighting mode is preset in the lighting fixture.

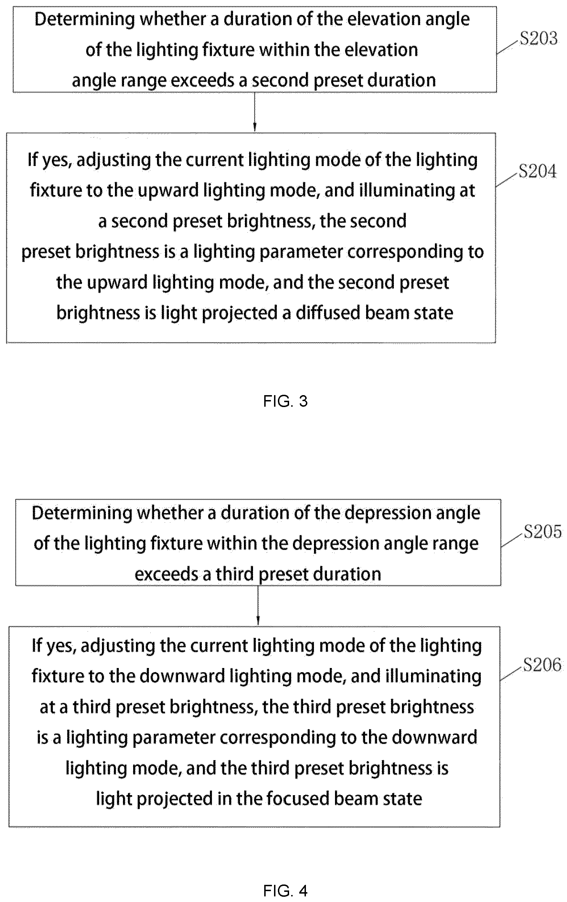

As shown in FIG. 3, in steps of adjusting the current lighting mode of the lighting fixture based on the current attitude data, to make the current lighting mode of the lighting fixture correspond to the current attitude data of the lighting fixture, and controlling the lighting fixture to illuminate according to the lighting parameters corresponding to the current lighting mode of the lighting fixture, including:
S203: determining whether a duration of the elevation angle of the lighting fixture within the elevation angle range exceeds a second preset duration;
S204: if yes, adjusting the current lighting mode of the lighting fixture to the upward lighting mode, and illuminating at a second preset brightness, the second preset brightness is a lighting parameter corresponding to the upward lighting mode, and the second preset brightness is light projected a diffused beam state.

Furthermore, acquiring continuously the elevation angle of the lighting fixture, when the duration of the elevation angle of the lighting fixture within the upward angle range is greater than the second preset duration, then it indicates that the lighting fixture is currently in the upward lighting mode; if the current lighting mode of the lighting fixture at this time is the upward lighting mode, then illumination can be performed with the lighting parameters corresponding to the upward lighting mode; if the current lighting mode of the lighting fixture at this time is not the upward lighting mode, then adjustment of the current lighting mode is required at this time, until the current lighting mode becomes the upward lighting mode, and further illumination is performed with the lighting parameters corresponding to the upward lighting mode.

In the present embodiment, when in the upward lighting mode, illumination is performed at the second preset brightness, causing the lighting fixture to project light in a diffused state.

In some embodiments, the current attitude data includes a depression angle, the lighting modes include a downward lighting mode, and a depression angle range corresponding to the downward lighting mode is preset in the lighting fixture.

As shown in FIG. 4, in steps of adjusting the current lighting mode of the lighting fixture based on the current attitude data, to make the current lighting mode of the lighting fixture correspond to the current attitude data of the lighting fixture, and controlling the lighting fixture to illuminate according to the lighting parameters corresponding to the current lighting mode of the lighting fixture, including:
S205: determining whether a duration of the depression angle of the lighting fixture within the depression angle range exceeds a third preset duration;
S206: if yes, adjusting the current lighting mode of the lighting fixture to the downward lighting mode, and illuminating at a third preset brightness, the third preset brightness is a lighting parameter corresponding to the downward lighting mode, and the third preset brightness is light projected in the focused beam state.

Furthermore, acquiring continuously the depression angle of the lighting fixture, when the duration of the depression angle of the lighting fixture within the downward angle range is greater than the third preset duration, then it indicates that the downward lighting mode is required at this time; if the lighting mode of the lighting fixture at this time is the downward lighting mode, then illumination can be performed with the lighting parameters corresponding to the downward lighting mode; if the lighting mode of the lighting fixture at this time is not the downward lighting mode, then adjustment of the lighting mode is required at this time, until the current lighting mode becomes the downward lighting mode, and further illumination is performed with the lighting parameters corresponding to the downward lighting mode.

In the present embodiment, when in the downward lighting mode, illumination is performed at the third preset brightness, causing the lighting fixture to transmit light in the focused beam state.

In some embodiments, the lighting modes include a motion lighting mode.

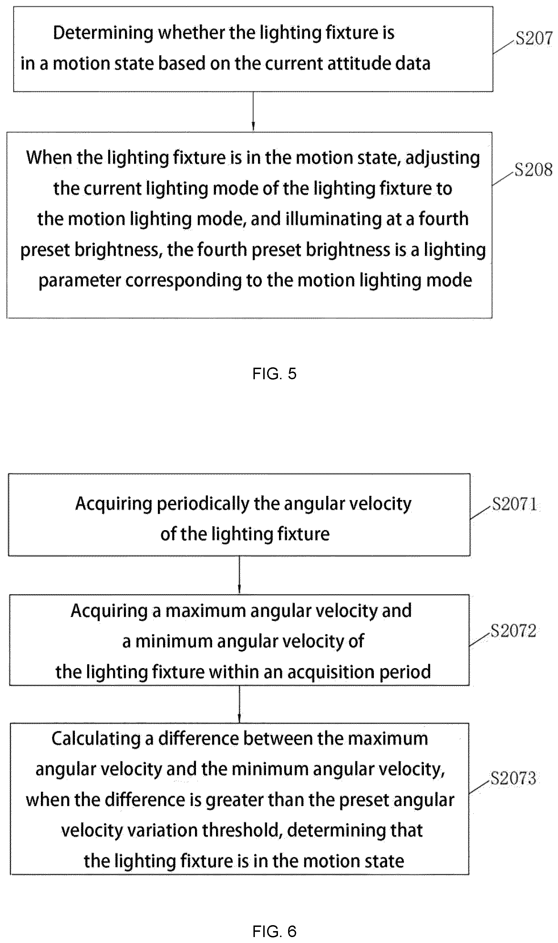

As shown in FIG. 5, in steps of adjusting the current lighting mode of the lighting fixture based on the current attitude data, to make the current lighting mode of the lighting fixture correspond to the current attitude data of the lighting fixture, and controlling the lighting fixture to illuminate according to the lighting parameters corresponding to the current lighting mode of the lighting fixture, including:
S207: determining whether the lighting fixture is in a motion state based on the current attitude data;
S208: when the lighting fixture is in the motion state, adjusting the current lighting mode of the lighting fixture to the motion lighting mode, and illuminating at a fourth preset brightness, the fourth preset brightness is a lighting parameter corresponding to the motion lighting mode.

In the present embodiment, whether the lighting fixture is in the motion state can be determined according to current attitude data of the lighting fixture. When the lighting fixture is in the motion state, the current lighting mode of the lighting fixture is adjusted to the motion lighting mode, and illumination is performed at the fourth preset brightness, the fourth preset brightness includes simultaneously projecting light in both the diffused state and the focused beam state.

Furthermore, the current attitude data may include an angular velocity of the lighting fixture. An angular velocity variation threshold is preset in the lighting fixture.

As shown in FIG. 6, in steps of determining whether the lighting fixture is in the motion state based on the current attitude data, including:
S2071: acquiring periodically the angular velocity of the lighting fixture;
S2072: acquiring a maximum angular velocity and a minimum angular velocity of the lighting fixture within an acquisition period;
S2073: calculating a difference between the maximum angular velocity and the minimum angular velocity, when the difference is greater than the preset threshold, determining that the lighting fixture is in the motion state.

When determining whether the lighting fixture is in the motion state, the angular velocity of the lighting fixture is periodically acquired; subsequently, the maximum angular velocity and the minimum angular velocity of the lighting fixture within the acquisition period are obtained, and the difference between the maximum angular velocity and the minimum angular velocity is calculated. When the difference is greater than the preset threshold, it indicates that the lighting fixture is in the motion state. If the current lighting mode of the lighting fixture at this time is not the motion lighting mode, then adjustment of the current lighting mode is required at this time, until the current lighting mode becomes the motion lighting mode, and further illumination is performed with the lighting parameters corresponding to the motion lighting mode (namely, illumination is performed at the fourth preset brightness).

Conversely, when the difference between the maximum angular velocity and the minimum angular velocity is less than the preset threshold, it indicates that the lighting fixture is not in the motion state.

In the present embodiment, when determining the preset threshold, it can be determined according to actual conditions. For example, when the lighting fixture is the flashlight, it may correspond to one preset threshold; as another example, when the lighting fixture is the headlamp, it may correspond to one preset threshold. Therefore, those skilled in the art can determine values of the preset threshold according to the actual conditions, with no excessive limitations made herein.

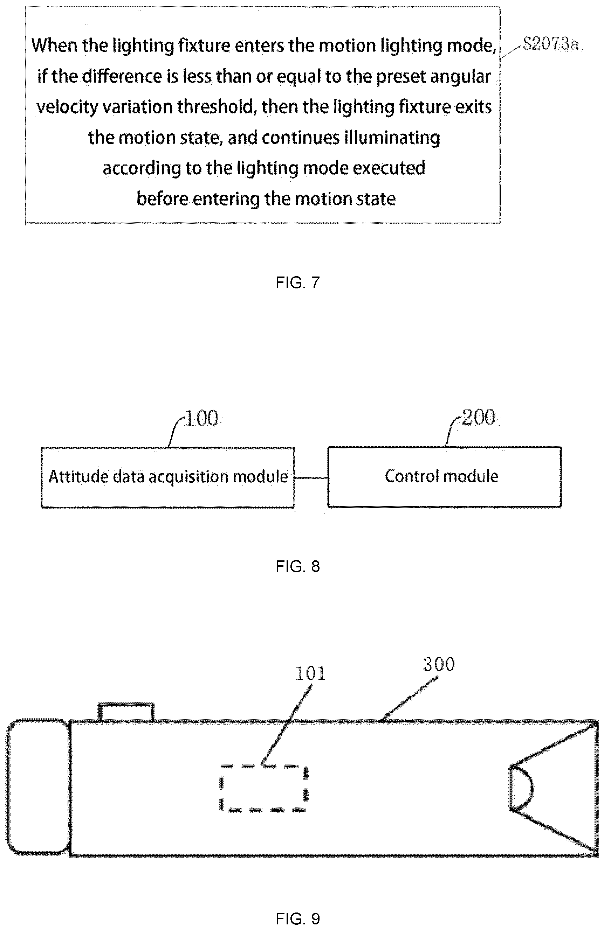

Furthermore, as shown in FIG. 7, in steps of calculating the difference between the maximum angular velocity and the minimum angular velocity, when the difference is greater than the preset threshold, then the lighting fixture is in the motion state, including:

S2073a: when the lighting fixture enters the motion lighting mode, if the difference is less than or equal to the preset threshold, then the lighting fixture exits the motion state, and continues illuminating according to the lighting mode executed before entering the motion state.

In the present embodiment, after the lighting fixture enters the motion lighting mode, the angular velocity continues to be periodically acquired. When the difference between the maximum angular velocity and the minimum angular velocity is less than the preset threshold, it indicates that the lighting fixture is not in the motion state, at which time the motion lighting mode needs to be exited, and illumination continues to be performed according to the lighting mode executed before entering the motion lighting mode.

In some embodiments, as shown in FIG. 8, the present application further provides a lighting fixture. The lighting fixture may include a fixture body, an attitude data acquisition module 100, and a control module 200.

The attitude data acquisition module 100 is disposed on the fixture body, and the attitude data acquisition module 100 is configured to acquire the current attitude data of the lighting fixture; the control module 200 is connected to the attitude data acquisition module 100, and the control module 200 is configured to execute the control method for the lighting fixture as described above.

The control module 200 includes the plurality of lighting modes, the each lighting mode is associated with the corresponding lighting parameters, with one lighting mode preset as the current lighting mode of the lighting fixture. The attitude data acquisition module 100 continuously acquires the current attitude data of the lighting fixture in real time. When the lighting fixture is in application, it requires different lighting modes according to different lighting conditions, and the lighting modes are related to the attitude of the lighting fixture. Therefore, the control module 200 can adjust the current lighting mode based on the acquired current attitude data of the lighting fixture, the lighting modes set corresponding to the current attitude data as the current lighting mode, and illumination is performed according to the lighting parameters corresponding to the adjusted lighting mode. The lighting parameters can include the light pattern and brightness of the lighting fixture.

In the present embodiment, when switching the lighting modes of the lighting fixture, the control module 200 determines whether the current attitude data corresponds to the lighting mode according to the acquired current attitude data; if yes, illumination is performed with the lighting parameters corresponding to the lighting mode; if no, the lighting mode is switched until the current lighting mode corresponds to the current attitude data of the lighting fixture, and illumination is performed according to the lighting parameters corresponding to the current lighting mode of the lighting fixture. Thus, when switching lighting modes, the lighting fixture achieves automatic switching without requiring operation through the physical buttons, thereby enhancing user experience and reducing operational frequency of the physical buttons.

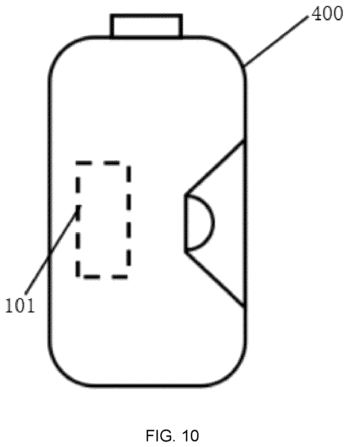

In some embodiments, as shown in FIG. 9 and FIG. 10, the attitude data acquisition module 100 may include a gyroscope 101. The gyroscope 101 is disposed on the fixture body and connected to the control module 200.

When the gyroscope 101 is configured, one gyroscope 101 may be disposed on the fixture body. The gyroscope 101 continuously acquires the current attitude data of the lighting fixture in real time and outputs the data to the control module 200, namely, the control module 200 acquires the current attitude data of the lighting fixture in real time.

In some embodiments, as shown in FIG. 9 and FIG. 10, the lighting fixture may be the headlamp or flashlight, and the fixture body may be the headlamp body 400 or flashlight body 300.

In some embodiments, the control module 200 may be a circuit structure built with a single-chip microcomputer as the core component. Those skilled in the art can determine the circuit structure of the control module 200 according to actual conditions, with no excessive limitations made herein.

Here, it should be noted that the description of the lighting fixture embodiments above is similar to the description of the control method embodiments for the lighting fixture, and have beneficial effects analogous to those of the control method for the lighting fixture. For technical details not disclosed in the lighting fixture embodiments, please refer to the description of the embodiments of the control method for the lighting fixture of the present application for understanding.

In summary, the present application provides a control method for a lighting fixture and the lighting fixture, having the following beneficial effects:
When switching lighting modes, it is determined through acquired current attitude data whether current attitude data corresponds to a lighting mode; if yes, illumination is performed with lighting parameters corresponding to the lighting mode; if no, the lighting mode is switched until a current lighting mode corresponds to the current attitude data of the lighting fixture, and illumination is performed according to the lighting parameters corresponding to the current lighting mode of the lighting fixture. Thus, the control method for the lighting fixture when switching the lighting modes can automatically switch without requiring switching through physical buttons, enhances user experience, and reduces a number of operations on physical buttons.

It is to be understood that the above embodiments merely express implementations of the present application, which are described with relative specificity and detail, but are not to be construed as limiting the scope of the patent rights of the present application. It should be noted that, for those of ordinary skill in the art, without departing from the inventive concept of the present application, the above technical features may be freely combined, and several variations and improvements may also be made, all of which fall within the protection scope of the present application. Therefore, all equivalent modifications and variations made within the scope of the claims of the present application shall be encompassed by the claims of the present application.

## Claims

1. A control method for a lighting fixture, wherein the lighting fixture comprises a plurality of lighting modes, each lighting mode is associated with corresponding lighting parameters, with one lighting mode being preset as a current lighting mode of the lighting fixture, the control method comprising:
acquiring continuously current attitude data of the lighting fixture; and
adjusting the current lighting mode of the lighting fixture based on the current attitude data, wherein the current lighting mode corresponds to the current attitude data of the lighting fixture, and controlling the lighting fixture to illuminate based on the lighting parameters corresponding to the current lighting mode.

2. The control method for a lighting fixture according to claim 1, wherein the current attitude data comprises a horizontal angle, the lighting modes comprise a horizontal lighting mode, and the lighting fixture is preset with a horizontal angle range;
the adjusting the current lighting mode of the lighting fixture based on the current attitude data, wherein the current lighting mode corresponds to the current attitude data of the lighting fixture, and controlling the lighting fixture to illuminate based on the lighting parameters corresponding to the current lighting mode comprises:
determining whether a duration of the horizontal angle of the lighting fixture within the horizontal angle range exceeds a first preset duration;
if yes, adjusting the current lighting mode of the lighting fixture to the horizontal lighting mode, and illuminating at a first preset brightness, wherein the first preset brightness is a lighting parameter corresponding to the horizontal lighting mode, and the first preset brightness is light projected in a focused beam state.

3. The control method for a lighting fixture according to claim 1, wherein the current attitude data comprises an elevation angle, the lighting modes comprise an upward lighting mode, and the lighting fixture is preset with an elevation angle range;
the adjusting the current lighting mode of the lighting fixture based on the current attitude data, wherein the current lighting mode corresponds to the current attitude data of the lighting fixture, and controlling the lighting fixture to illuminate based on the lighting parameters corresponding to the current lighting mode comprises:
determining whether a duration of the elevation angle of the lighting fixture within the elevation angle range exceeds a second preset duration;
if yes, adjusting the current lighting mode of the lighting fixture to the upward lighting mode, and illuminating at a second preset brightness, wherein the second preset brightness is a lighting parameter corresponding to the upward lighting mode, and the second preset brightness is light projected a diffused beam state.

4. The control method for a lighting fixture according to claim 1, wherein the current attitude data comprises a depression angle, the lighting modes comprise a downward lighting mode, and the lighting fixture is preset with a depression angle range;
the adjusting the current lighting mode of the lighting fixture based on the current attitude data, wherein the current lighting mode corresponds to the current attitude data of the lighting fixture, and controlling the lighting fixture to illuminate based on the lighting parameters corresponding to the current lighting mode comprises:
determining whether a duration of the depression angle of the lighting fixture within the depression angle range exceeds a third preset duration;
if yes, adjusting the current lighting mode of the lighting fixture to the downward lighting mode, and illuminating at a third preset brightness, wherein the third preset brightness is a lighting parameter corresponding to the downward lighting mode, and the third preset brightness is light projected in the focused beam state.

5. The control method for a lighting fixture according to claim 1, wherein the lighting modes comprise a motion lighting mode;
the adjusting the current lighting mode of the lighting fixture based on the current attitude data, wherein the current lighting mode corresponds to the current attitude data of the lighting fixture, and controlling the lighting fixture to illuminate based on the lighting parameters corresponding to the current lighting mode comprises:
determining whether the lighting fixture is in a motion state based on the current attitude data;
when the lighting fixture is in the motion state, adjusting the current lighting mode of the lighting fixture to the motion lighting mode, and illuminating at a fourth preset brightness, the fourth preset brightness is a lighting parameter corresponding to the motion lighting mode.

6. The control method for a lighting fixture according to claim 5, wherein the lighting fixture is preset with an angular velocity variation threshold, the current attitude data comprises an angular velocity of the lighting fixture;
the determining whether the lighting fixture is in a motion state based on the current attitude data comprises:
acquiring periodically the angular velocity of the lighting fixture;
acquiring a maximum angular velocity and a minimum angular velocity of the lighting fixture within an acquisition period;
calculating a difference between the maximum angular velocity and the minimum angular velocity, when the difference is greater than the preset angular velocity variation threshold, determining that the lighting fixture is in the motion state.

7. The control method for a lighting fixture according to claim 6, wherein the calculating a difference between the maximum angular velocity and the minimum angular velocity, when the difference is greater than the preset angular velocity variation threshold, determining that the lighting fixture is in the motion state comprises:
when the lighting fixture enters the motion lighting mode, if the difference is less than or equal to the preset angular velocity variation threshold, then the lighting fixture exits the motion state, and continues illuminating according to the lighting mode executed before entering the motion state.

8. A lighting fixture, comprising:
a fixture body;
an attitude data acquisition module, disposed on the fixture body, the attitude data acquisition module is configured to acquire current attitude data of the lighting fixture;
a control module, connected to the attitude data acquisition module, the control module is configured to execute the control method for the lighting fixture according to any one of claims 1-7.

9. The lighting fixture according to claim 8, wherein the attitude data acquisition module comprises:
a gyroscope, disposed on the fixture body, the gyroscope is connected to the control module.

10. The lighting fixture according to claim 8 or 9, wherein the fixture body is a headlamp body.
